# EUROPÄISCHE PATENTSCHRIFT

(11) **EP 3 694 730 B1**
(45) Veröffentlichungstag und Bekanntmachung des Hinweises auf die Patenterteilung: **07.04.2021**
(21) Anmeldenummer: 18781993.3
(22) Anmeldetag: 25.09.2018
(51) Int. Cl.: B60D 1/62, B62D 15/02, B60D 1/01

(54) **GIERWINKELMESSVORRICHTUNG**
YAW ANGLE MEASUREMENT DEVICE
DISPOSITIF DE MESURE DE L'ANGLE DE LACET

(30) Priorität: 09.10.2017 DE 102017123328
(43) Veröffentlichungstag der Anmeldung: 19.08.2020
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2018/075845
(87) Internationale Veröffentlichungsnummer: WO 2019/072533

(56) Entgegenhaltungen:
- DE-A1-102010 054 958
- DE-U1- 20 306 787
- GB-A- 2 470 610

## Beschreibung

Die Erfindung betrifft eine Gierwinkelmessvorrichtung für eine trennbare Kupplungsanordnung, insbesondere für Sattelkupplungen.

Gierwinkelmessvorrichtungen dienen dazu, den relativen Gierwinkel zwischen zwei Fahrzeugen, insbesondere dem Zugfahrzeug und einem Sattelauflieger eines Gliederzugs, zu bestimmen, wobei der Gierwinkel der Winkel um die Normale der Fahrebene ist. Die Kenntnis des relativen Gierwinkels dient unter anderem dazu, kritische Fahrzustände zu erkennen und geeignete Gegenmaßnahmen zu ergreifen. Die aus dem Stand der Technik bekannten Messsysteme benötigen dabei einen großen Bauraum, wodurch unter anderem die Manövrierfähigkeit des Gliederzugs eingeschränkt wird.

Die DE 10 2010 054 958 A1 betrifft eine Anhängerkupplung mit einer Knickwinkel-Messvorrichtung, wobei die fahrzeugseitige Ankoppelvorrichtung einen Kugelkopf auf einem vertikalen Kupplungshals aufweist.

Die DE 203 06 787 U1 betrifft eine Vorrichtung zum Erfassen des Winkels zwischen den geometrischen Längsmittelachsen einer Sattelzugmaschine und einem über einen Zugsattelzapfen angekuppelten Sattelanhänger, wobei diese Vorrichtung eine Mehrzahl von Hallsensoren aufweist.

Die GB 2470610 A zeigt ein System zum Messen des Winkels zwischen einem Anhänger in Relation zu einem Zugfahrzeug, wobei die Messvorrichtung keinen Winkel ausgibt, bis die Sensorvorrichtung vorschriftsmäßig angeordnet ist Die EP 2 899 101 A1 offenbart eine Gierwinkelmessvorrichtung gemäß dem Oberbegriff des Anspruchs 1.

Es ist somit Aufgabe der vorliegenden Erfindung eine Gierwinkelmessvorrichtung bereit zu stellen, welche nur einen geringen Bauraumbedarf aufweist.

Gelöst wird diese Aufgabe mittels einer Gierwinkelmessvorrichtung gemäß Anspruch 1 und einem Nutzfahrzeug gemäß Anspruch 15. Vorteilhafte Merkmale oder Weiterbildungen ergeben sich aus den abhängigen Ansprüchen, der Beschreibung und den Figuren.

Erfindungsgemäß umfasst eine Gierwinkelmessvorrichtung für eine trennbare Kupplungsanordnung, insbesondere für Sattelkupplungen, ein Geberelement und eine Messanordnung, wobei das Geberelement an einem ersten Kupplungspartner und die Messanordnung an einem zweiten Kupplungspartner angeordnet oder anordenbar sind, wobei der erste Kupplungspartner dazu ausgelegt ist, durch die Kupplungsanordnung um eine Rotationsachse relativ zum zweiten Kupplungspartner drehbar gelagert zu werden, wobei das Geberelement ein Messsignal in der Messanordnung erzeugt, welches dazu dient, den Gierwinkel um die Rotationsachse zu bestimmen. Die trennbare Kupplungsanordnung ist dabei eine ein- und auskuppelbare Kupplungsanordnung, welche im eingekuppelten Zustand in der Lage ist, eine Zugkraft von einem Fahrzeugteil auf einen anderen zu übertragen. Insbesondere handelt es sich bei dieser Kupplungsanordnung um eine Sattelkupplung, welche insbesondere in Sattelzügen von Nutzfahrzeugen Anwendung findet. Die Fahrzeugteile, welche mittels der Kupplungsanordnung verbunden werden können, können insbesondere durch ein Zugfahrzeug und einen Anhänger bzw. Sattelauflieger oder Trailer gebildet sein oder durch zwei Anhänger. Die durch die Kupplungsanordnung übertragbare Zugkraft ist dabei insbesondere diejenige Kraft, welche das gezogene Fahrzeug fortbewegt. Der erste oder der zweite Kupplungspartner dienen dazu, die beiden zu verkuppelnden Fahrzeugteile derart miteinander zu verbinden, dass zwischen diesen eine Zugkraft übertragen werden kann. Die beiden Kupplungspartner können insbesondere durch einen trailer- oder anhängerseitigen Königszapfen und durch die zugfahrzeugseitigen Kupplungselemente, insbesondere durch eine zugfahrzeugseitige Sattelkupplung, gebildet sein. Entscheidend ist dabei, dass einer der beiden Kupplungspartner an dem ersten Fahrzeugteil und der andere Kupplungspartner an dem anderen Fahrzeugteil angeordnet oder dazu ausgelegt ist, an diesem angeordnet zu werden. Die Rotationsachse, um welche der erste Kupplungspartner relativ zum zweiten Kupplungspartner durch die Kupplungsanordnung drehbar gelagert ist, ist insbesondere die Hochachse, um welche sich der Gierwinkel bestimmt. Das Geberelement der Gierwinkelmessvorrichtung ist ein Element, welches dazu dient, einen Messwert in der Messanordnung zu generieren. In anderen Worten entsteht in der Messanordnung ein Messsignal, welches durch die Interaktion mit dem Geberelement entsteht. Bevorzugt erfolgt diese Messwertgenerierung dabei berührungslos oder alternativ bevorzugt berührend durch einen Kontakt des Geberelements mit der Messanordnung. Beispielsweise kann das Geberelement daher kontaktieren oder einen, insbesondere nicht körperlichen, Informationsträger wie zum Beispiel Ultraschall oder Feldlinien eines Magnetfels derart umlenken oder emittieren, dass dieser in der Messanordnung detektiert werden kann. Das Geberelement ist dabei mittel- oder unmittelbar an dem ersten Kupplungspartner angeordnet. Bevorzugt ist das Geberelement messsignal- und/oder energieanschlusslos, weist daher keinen Anschluss auf, mittels welchem Messsignale und/oder Energie aus oder in das Geberelement gelangen kann. In anderen Worten bedeutet dies, dass das Geberelement ein passives Element darstellen kann. Hierdurch wird ein besonders ausfallsicheres Geberelement erreicht. Die Messanordnung ist das Element der Gierwinkelmessvorrichtung, in welchem das Messsignal entsteht, mittels welchem der Gierwinkel bestimmt wird. Die eigentliche Bestimmung kann dabei direkt oder durch einen Auswertungsalgorithmus erfolgen. Dieser Auswertungsalgorithmus kann vorteilhafterweise unter Ausnutzung einer Datenverarbeitungsanlage ausgeführt werden. Die Messanordnung ist insbesondere dadurch charakterisiert, dass diese eine Datenleitung oder einen Datenbus aufweist, mittels welchem das Messsignal von der Messanordnung wegtransportiert bzw. geleitet wird. Besonders bevorzugt ist es, wenn die Messanordnung ein rein empfangendes Element darstellt, sodass dieses keinen Informationsträger emittiert, sondern lediglich empfängt. In anderen Worten ist die Messanordnung daher bevorzugt ein Wandler, welcher den Informationsträger in ein, insbesondere analoges oder digitales elektrisches, Messsignal konvertiert. Durch das unmittelbare oder mittelbare Anordnen des Geberelements und der Messanordnung an den Kupplungspartnern resultiert eine besonders kompakte Gierwinkelmessvorrichtung. In einer beispielhaften Ausführungsform kann das Geberelement beispielsweise durch einen Magneten, insbesondere einen Permanentmagneten, gebildet sein. Die Messanordnung kann in diesem Ausführungsbeispiel über einen weiteren Magneten verfügen, dessen Ausrichtung, insbesondere durch ein Potenziometer, gemessen wird. Der Vorteil dieser Ausführungsform liegt darin, dass in diesem Ausführungsbeispiel nicht vom Halleffekt Gebrauch gemacht wird, sodass ein zeitlich stationärer Zustand gemessen werden kann. Bevorzugt ist die Gierwinkelmessvorrichtung dabei im Wesentlichen innerhalb des Raumes bzw. Bauraums angeordnet, welcher sich zwischen der Unterkante des Königszapfens bis zur Oberkante der Kupplungsplatte bzw. bis zur Unterkante des Verschraubungsabsatzes des Königszapfens erstreckt.

Bevorzugt weisen der erste Kupplungspartner und der zweite Kupplungspartner über Kraftübertragungsflächen auf, wobei die Kraftübertragungsflächen dazu ausgelegt sind, Kräfte in eine Ausfahrrichtung und/oder in eine Querrichtung vom ersten Kupplungspartner auf den zweiten Kupplungspartner zu übertragen, und wobei das Geberelement und die Messanordnung außerhalb, insbesondere oberhalb und/oder unterhalb, der Kraftübertragungsflächen angeordnet sind. Die Ausfahrrichtung ist dabei insbesondere diejenige Richtung, in welche die beiden Kupplungspartner bewegt werden müssen, damit diese voneinander entkoppelt werden können. Bei einer Sattelkupplung ist die Ausfahrrichtung daher insbesondere die Richtung, in welche sich der Königszapfen von der Festhalte- oder Kuppelposition in Richtung der Aus- oder Einfahröffnung relativ zur Sattelkupplungsplatte bewegen muss, um entkoppelt zu werden. Besonders bevorzugt handelt es sich daher bei der Ausfahrrichtung um diejenige Richtung, welche entgegen der Einfahrrichtung gerichtet ist. Die Einfahrrichtung hingegen ist insbesondere diejenige Richtung, in welche das Fahrzeug in Zugrichtung fährt. Die Zugrichtung ist dabei insbesondere diejenige Richtung, in welche sich das Zugfahrzeug bei Vorwärtsfahrt bewegt. Die Ausfahrrichtung und die Einfahrrichtung stehen dabei bevorzugt im Wesentlichen senkrecht zu der Rotationsachse. Unter im Wesentlichen senkrecht ist dabei in diesem Zusammenhang zu verstehen, dass die Ausfahrrichtung bzw. die Einfahrrichtung einen Winkel von 80° - 100° mit der Rotationsachse bilden können. Die Querrichtung steht dabei im Wesentlichen senkrecht zu der Ausfahrrichtung und der Rotationsachse. In anderen Worten bedeutet dies, dass die Querrichtung diejenige Richtung ist, in welche sich die Breite der Fahrzeuge, welche mittels der Kupplungsanordnung verbunden sind bzw. verbunden werden sollen, bei Geradeausfahrt bestimmt. Die Kraftübertragungsflächen des ersten bzw. des zweiten Kupplungspartners sind daher diejenigen Flächen, welche dazu dienen, eine Zugkraft von einem Fahrzeugteil auf den anderen zu übertragen. Die Kraftübertragungsflächen sind daher insbesondere durch die Flächen des Königszapfens und einer Kupplungsverschlusseinheit gebildet, welche miteinander kontaktieren können. Keine Kraftübertragungsflächen im Sinne der vorliegenden Erfindung sind dabei insbesondere die Flächen, welche bei einer Verlagerung der beiden Kupplungspartner in Einfahrrichtung in Kontakt treten, wie es beispielsweise bei einer Bremsung der Fall ist. Daher stellt insbesondere der Verschleißring der Sattelkupplung keine Kraftübertragungsfläche dar. Das Geberelement und die Messanordnung sind bevorzugt außerhalb dieser Kraftübertragungsflächen angeordnet, insbesondere oberhalb oder unterhalb dieser Flächen, wobei sich ober- oder unterhalb insbesondere auf die Richtung bezieht, in welche die Rotationsachse weist. Unter "außerhalb angeordnet" ist dabei in diesem Zusammenhang zu verstehen, dass diese nicht an den Kraftübertragungsflächen angeordnet sind oder mit diesen in Kontakt stehen. Hierdurch wird erreicht, dass das Geberelement und die Messanordnung zumindest nur geringfügig durch die zu übertragenden Kräfte in Zugrichtung während des Ziehens belastet werden, sodass eine hohe Lebensdauer der Gierwinkelmessvorrichtung erreicht werden kann. Besonders bevorzugt ist es, um Bauraum zu sparen, wenn die Messanordnung am Verschleißring angeordnet ist und/oder in welchem der Gierwinkel von der Gierwinkelmessvorrichtung detektiert bzw. gemessen werden kann.

Zweckmäßigerweise erstreckt sich die Messanordnung in einem Bereich von mindestens + 89° bis - 89°, bevorzugt von + 45° bis - 45° und besonders bevorzugt in einem Bereich von + 15° bis - 15° um die Rotationsachse. Der Nullpunkt dieses Erstreckungswinkels liegt dabei zweckmäßigerweise in bzw. auf der Einfahrrichtung. Bei einem Erstreckungswinkel von + 89° bis - 89° wird ein besonders großer Messbereich ermöglicht, sodass eine extrem sichere Überwachung des Gierwinkels resultiert. Bei einem Erstreckungswinkel um die Rotationsachse von mindestens + 45° bis - 45° wird sichergestellt, dass der Gierwinkel auch während kurvenreicher Manöver, insbesondere Rangierfahrten, detektiert werden kann. Bei einem Erstreckungswinkel von + 15° bis - 15° wird eine Gierwinkeldetektion erreicht, welche die besonders kritischen Fahrsituationen abdeckt, jedoch nur einen geringen Bauraumbedarf einnimmt. Der Erstreckungswinkel ist dabei insbesondere der Winkel um die Rotationsachse, welcher die Messanordnung beidseitig umschließt.

Vorteilhafterweise ist das Geberelement rotationsstarr mit dem ersten Kupplungspartner verbunden oder verbindbar. Alternativ oder zusätzlich bevorzugt ist auch die Messanordnung rotationsstarr mit dem zweiten Kupplungspartner verbunden oder verbindbar. Durch diese rotationsstarre Anordnung, insbesondere bezogen auf die Rotationsachse - um die der Gierwinkel gemessen wird - oder alternative um alle potentiellen Rotationsachsen, wird erreicht, dass keine relative Rotation zwischen dem Geberelement und dem ersten Kupplungspartner bzw. der Messanordnung und dem zweiten Kupplungspartner stattfinden kann, welche zu Messfehlern führen kann. Besonders bevorzugt ist es, wenn die Verbindung zwischen dem ersten Kupplungspartner und dem Geberelement und/oder dem zweiten Kupplungspartner und der Messanordnung ortsfest ausgeführt ist, sodass sowohl keine Verlagerung als auch keine Rotation zwischen den Verbindungspartnern stattfinden kann. Hierdurch wird eine besonders verschleißarme Verbindung sichergestellt, da kein abrasiver Verschleiß auftreten kann.

Bevorzugt weist das Geberelement einen Vorsprung auf, welcher in eine Richtung senkrecht zu der Rotationsachse und in Richtung des zweiten Kupplungspartners hervorspringt. Hierdurch kann ein besonders bauraumsparendes Geberelement und somit eine bauraumsparende Gierwinkelmessvorrichtung erreicht werden. Der Vorsprung kann dabei durch eine Nase, eine Exzentrizität oder durch eine ovale oder nockenförmige Außenkontur gebildet sein. Dieser Vorsprung ist bevorzugt derart an dem Geberelement bzw. an dem ersten Kupplungspartner angeordnet, dass dieser bei Geradeausfahrt in Richtung der Einfahrrichtung oder in Richtung der Ausfahrrichtung weist. Hierdurch wird ermöglicht, dass eine besonders einfache Kalibrationskontrolle stattfinden kann.

Zweckmäßigerweise erstreckt sich der Vorsprung von einer Außenfläche, welche zumindest bereichsweise rotationssymmetrisch bezüglich der Rotationsachse ist. Durch die rotationssymmetrische Ausgestaltung der Außenfläche kann erreicht werden, dass diese während einer Lenk- bzw. Manövrierbewegung keine äußeren Erscheinungs- bzw. Bauraumbedarfsveränderungen aufweist. Es versteht sich dabei, dass die Rotationssymmetrie nicht den Vorsprung mit einbezieht, daher bezieht sich diese Rotationssymmetrie nur auf die Bereiche der Außenfläche, welche nicht durch den Vorsprung gebildet sind. Besonders bevorzugt ist es dabei, wenn die Außenfläche komplett rotationssymmetrisch um die Rotationsachse - bis auf den insbesondere einen Vorsprung - ist, sodass eine kostengünstige Fertigung resultiert.

Zweckmäßigerweise ist der erste Kupplungspartner ein Königszapfen, wobei das Geberelement ein Teil des Königszapfens ist, oder durch eine Hülse gebildet ist, welche den Königszapfen zumindest bereichsweise, bevorzugt vollständig, umgibt. Hierdurch kann eine besonders gute Zugänglichkeit des Geberelements erreicht werden, sodass Kosten bei der Wartung und der Montage gespart werden können. Alternativ kann das Geberelement auch zumindest teilweise, bevorzugt vollständig, in den Königszapfen eingelassen sein. Dies kann beispielsweise durch ein Anordnen des Geberelements in einer Bohrung des Königszapfens erfolgen. Hierdurch wird erreicht, dass das Geberelement durch die äußeren Abmessungen des Königszapfens geschützt wird.

Erfindungsgemäß steht das Geberelement unmittelbar mit der Messanordnung in Kontakt, und wobei dieser unmittelbare Kontakt das Messsignal in der Messanordnung erzeugt. Hierdurch kann ein besonders hohes Maß an Sicherheit bzw. Verlässlichkeit der Messung des Gierwinkels erreicht werden. In anderen Worten handelt es sich bei der Gierwinkelmessvorrichtung dabei um eine kontaktierende Messapparatur, welche durch das Geberelement und die Messanordnung gebildet wird. Besonders bevorzugt erfolgt dieser unmittelbare (direkte) Kontakt dabei verbindungslos, d. h. derart, dass bei einem Auskuppeln (Trennen der Kupplungspartner) keine Verbindungen zwischen dem Geberelement und der Messanordnung getrennt werden müssen. Hierdurch kann der Auskupplungsprozess beschleunigt werden und somit Geld gespart werden. Insbesondere können verbindungslose Kontakte dadurch gekennzeichnet sein, dass durch diese lediglich Druckspannungen übertragen werden können und keine Zugspannungen auftreten können. Besonderes bevorzugt ist es, wenn der unmittelbare Kontakt dabei flächig erfolgt. Hierdurch sinken die lokalen Flächenpressungen, sodass eine besonders standsichere und langlebige Gierwinkelmessvorrichtung resultiert. Unter flächigem Kontakt kann unter anderem verstanden werden, dass eine geometrisch zusammenhängende Kontaktfläche mindestens eine Größe von 5 cm² aufweist. Besonders bevorzugt ist es, wenn der Kontakt dabei derart ausgestaltet ist, dass dieser in einem eingekuppelten Zustand vorgespannt ist. Hierdurch kann sichergestellt werden, dass das Geberelement immer mit der Messanordnung in Kontakt steht, sodass eine besonders ausfallsichere Gierwinkelmessvorrichtung resultiert. Insbesondere ist der Kontakt dabei derart auszugestalten, dass dieser bevorzugt auch bei einer Beschleunigung und/oder Bremsung vorgespannt ist. Zusätzlich oder alternativ kann die Vorspannung auch zum Kalibrieren der Messanordnung genutzt werden.

In einer bevorzugten Ausführungsform verfügt die Messanordnung über einen Deformationsbestandteil und eine Detektionsanordnung, wobei der Deformationsbestandteil dazu ausgelegt ist, mit einem Teil des Geberelements, insbesondere dem Vorsprung, unmittelbar in Kontakt zu treten, und wobei die Detektionsanordnung dazu dient, die Lokation des Kontaktes zu bestimmen. Der Deformationsbestandteil der Messanordnung ist dabei bevorzugt aus einem elastischen Material gebildet, welches dazu ausgelegt ist, verformt zu werden. Zweckmäßigerweise ist der Deformationsbestandteil daher aus einem Polymerwerkstoff gebildet, um die Herstellungskosten zu reduzieren und die Verformbarkeit des Deformationsbestandteils zu erleichtern. Der Deformationsbestandteil ist dabei bevorzugt dazu ausgelegt, nur bereichsweise verformt zu werden, sodass dieser insbesondere keine Feder ist. Der Deformationsbestandteil ist zweckmäßigerweise zumindest ringsegmentförmig ausgestaltet, wobei das Ringsegment dabei die Rotationsachse zumindest bereichsweise umschließt. Die Detektionseinheit nutzt dabei die induzierten mechanische Spannung bzw. die Verformung des Deformationsbestandteils, um die Lokation des Kontaktes zu bestimmen. Die Detektionsanordnung kann daher insbesondere durch Piezoelemente oder durch Dehnungsmessstreifen gebildet sein. Bevorzugt ist die Detektionsanordnung zumindest bereichsweise durch den Deformationsbestandteil umschlossen. Hierdurch wird die meist empfindliche Detektionsanordnung durch den Deformationsbestandteil geschützt. Insbesondere umschließt der Deformationsbestandteil dabei die Detektionsanordnung derartig, dass nur der Deformationsbestandteil mit dem Geberelement kontaktieren kann. Besonders bevorzugt ist es, wenn die Detektionsanordnung über verschiedene Messsektionen bzw. Messpunkte oder Messelemente verfügt, welche insbesondere ringsegmentförmig um die Rotationsachse angeordnet oder anordenbar sind. Hierdurch wird erreicht, dass die einzelnen Messpunkte bzw. Messelemente der Detektionsanordnung jeweils separiert voneinander operieren können, sodass die Ausfallwahrscheinlichkeit der Messanordnung verringert wird. Besonders bevorzugt ist es, wenn die Messelemente bzw. Messpunkte, insbesondere in Form von Piezoelementen oder Dehnungsmessstreifen, derart nahe, insbesondere in Umfangsrichtung, zu einander angeordnet sind, dass eine Verformung des Deformationsbestandteils zumindest im eingekuppelten Zustand ein Messsignal in zumindest zwei Messelementen bzw. Messpunkten verursacht.

Vorteilhafterweise ist die Detektionsanordnung durch Piezoelemente gebildet. Hierdurch kann eine besonders verschleiß- und wartungsarme Detektionsanordnung erreicht werden.

Bevorzugt weist die Messanordnung eine Vielzahl von, insbesondere parallel zu der Rotationsachse verlaufenden, elektrischen Kontakte auf, wobei das Geberelement derart mit den elektrischen Kontakten in Eingriff bringbar ist, dass das Geberelement unmittelbar oder mittelbar zwei dieser elektrischen Kontakte leitend verbindet. Hierdurch wird ein besonders einfaches und störungsunanfälliges Messprinzip genutzt, sodass eine besonders zuverlässige Gierwinkelmessvorrichtung resultiert. Das Geberelement kann dabei unmittelbar die elektrischen Kontakte leitend verbinden, sodass das Geberelement selber als ein Teil dieser leitenden Verbindung ausgebildet ist. Alternativ bevorzugt kann das Geberelement auch unmittelbar diesen leitenden Kontakt herstellen beispielsweise durch eine Deformation des die elektrischen Kontakte umgebenden Bauteils oder Bereichs. Besonders bevorzugt ist dabei der Vorsprung des Geberelements derjenige Teil des Geberelements, welcher die elektrischen Kontakte leitend unmittelbar oder mittelbar verbindet. Um einen besonders guten Schutz der elektrischen Kontakte zu erreichen, ist es zweckmäßig, wenn die elektrischen Kontakte bzw. die diese umgebenden Elemente dabei als Detektionsanordnung innerhalb eines bereits beschriebenen Deformationsbestandteils angeordnet sind. In anderen Worten bedeutet dies, dass die elektrischen Kontakte in dieser Ausführungsform nur mittelbar mit dem Geberelement in Kontakt treten.

Alternativ ist zwischen dem Geberelement und der Messanordnung ein Spalt gebildet. In anderen Worten bedeutet dies, dass keine direkte Berührung des Geberelements mit der Messanordnung stattfindet. Hierdurch wird eine berührungslose Messmethodik ermöglicht. Durch diese berührungslose Messmethodik wird eine besonders verschleißarme Gierwinkelmessvorrichtung erreicht, welche daher eine besonders hohe Lebensdauer aufweist. Die berührungslose Messmethodik kann beispielsweise durch Ausnutzung von Magnetismus erreicht werden. Dies kann unter anderem durch die Nutzbarmachung des Halleffekts oder durch die Detektion der Pollagen eines Magnets, insbesondere eines Permanentmagnets, erreicht werden.

Weiterhin alternativ umfasst die Messanordnung eine optische Detektionsanordnung. In anderen Worten bedeutet dies, dass die Gierwinkelmessvorrichtung eine berührungslose optische Messmethodik verwendet. Bevorzugt ist das Geberelement dabei als ein passives Element ausgestaltet. Dies kann beispielsweise durch das Aufbringen eines optisch erkennbaren Musters erfolgen. Ein optisch erkennbares Muster kann beispielsweise durch einen Bar-, Farb- oder Strichcode oder alternativ durch eine oder mehrere Vertiefungen oder Absätze gebildet sein. Besonders bevorzugt ist es dabei, wenn das optisch erkennbare Muster durch den bereits beschriebenen Vorsprung gebildet ist. Alternativ bevorzugt kann das Geberelement auch als ein aktives Element ausgebildet sein. In anderen Worten bedeutet dies in diesem Zusammenhang, dass das Geberelement eine Lichtquelle umfasst. Beispielsweise kann das Geberelement daher einen Laser oder eine Stroboskoplampe aufweisen. Die Detektionsanordnung verfügt dabei bevorzugt zumindest über eine optische Erfassungseinrichtung, wie beispielsweise eine Kamera. Zusätzlich kann die Detektionsanordnung auch über eine Lichtquelle verfügen, wobei bei dieser Ausführungsform das Geberelement meist eine rein reflektierende Funktion erfüllt. Alternativ bevorzugt kann die Lichtquelle auch in einem separaten Bauteil oder Element angeordnet sein. Das Verwenden eines optischen Messverfahrens weist dabei den Vorteil auf, dass durch die dabei Anwendung findenden Messapparaturen keine anderen Sensoren im Kupplungsbereich gestört werden, wie dies beispielsweise bei einer magnetischen oder elektrischen Messanordnung der Fall ist.

Ein weiterer Aspekt der Erfindung betrifft ein Nutzfahrzeug mit einer Gierwinkelmessvorrichtung wie sie bereits beschreiben wurde.

Die weiteren Vorteile und Merkmale der vorliegenden Erfindung ergeben sich aus der nachfolgenden Beschreibung mit Bezug auf die beigefügten Figuren. Es zeigen:
Figur 1 einen Schnitt durch einen Ausschnitt einer Kupplungsanordnung, welche über eine erfindungsgemäße Gierwinkelmessvorrichtung verfügt;
Figur 2 ein Schnitt durch eine weitere Ausführungsform einer erfindungsgemäßen Gierwinkelmessvorrichtung;
Figur 3 eine Außenansicht eines zweiten Kupplungspartners, welcher über eine Messanordnung verfügt.

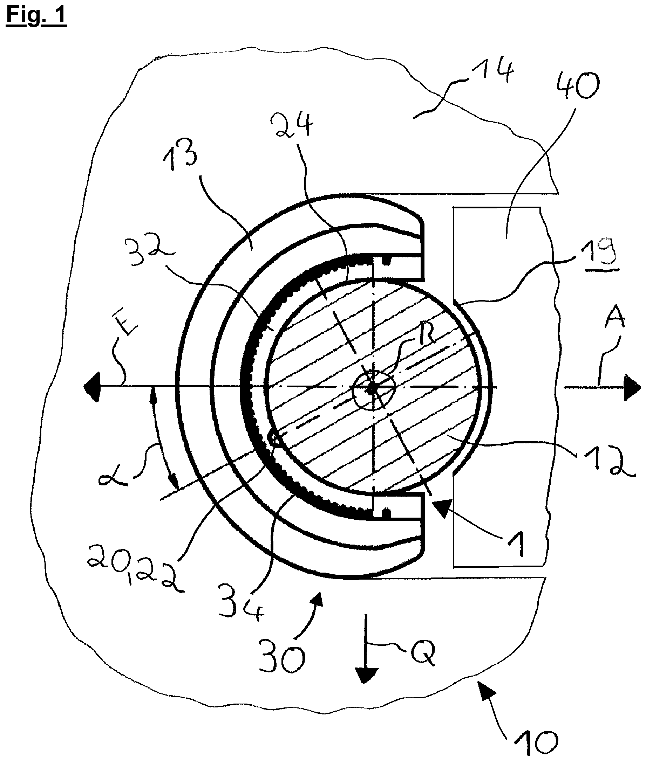

In der Figur 1 ist ein Schnitt durch eine Kupplungsanordnung 10 gezeigt, welche über eine Gierwinkelmessvorrichtung 1 verfügt. Die Kupplungsanordnung 10 umfasst unter anderem einen ersten Kupplungspartner 12 in Form eines Königzapfens, welcher sich entlang der Rotationsachse R erstreckt und einen zweiten Kupplungspartner 14 in Form einer Sattelkupplung. Der erste Kupplungspartner 12 ist dabei entlang der Einfahrrichtung E in den zweiten Kupplungspartner 14 eingeführt worden. Um eine Verlagerung des ersten Kupplungspartners 12 in Richtung der Ausfahrrichtung A zu verhindern, verfügt der zweite Kupplungspartner 14 über eine Kraftübertragungsfläche 19. Die Gierwinkelmessvorrichtung 1 dient dabei dazu, den relativen Gierwinkel α zwischen dem ersten Kupplungspartner 12 und dem zweiten Kupplungspartner 14 zu bestimmen. In der dargestellten Ausführungsform verfügt das Geberelement 20 der Gierwinkelmessvorrichtung 1 über einen Vorsprung 22, welcher unmittelbar an einer Außenfläche 24 des ersten Kupplungspartners 12 angeordnet ist. Das Geberelement 20 ist dabei einstückig mit dem ersten Kupplungspartner 12 ausgeführt. Der Vorsprung 22 steht dabei in unmittelbarem Kontakt mit einem ringsegmentförmigen Deformationsbestandteil 32, welcher daher zwischen dem ersten Kupplungspartner 12 und einem Verschleißring 13 angeordnet ist. Ebenfalls zwischen dem Verschleißring 13 und dem ersten Kupplungspartner 12 ist eine Detektionsanordnung 34 angeordnet. Die Detektionsanordnung 34 erstreckt sich dabei von einer positiven Querrichtung Q halbringförmig über die Einfahrrichtung E bis zur negativen Querrichtung Q, wobei die Querrichtung Q senkrecht auf der Einfahrrichtung E, der Rotationsachse R und der Ausfahrrichtung A steht.

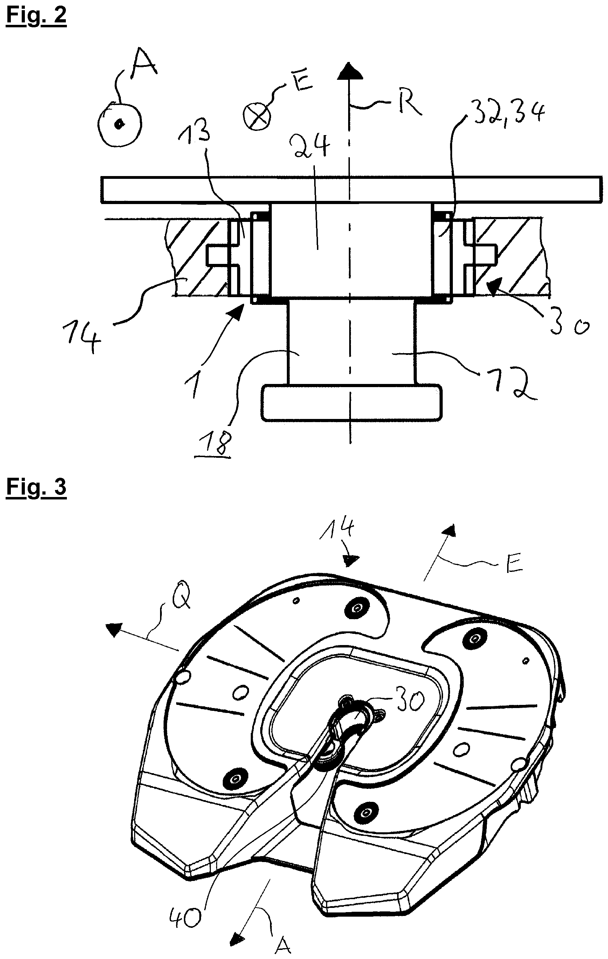

In der Figur 2 ist eine Teilschnittansicht gezeigt, in welcher eine Gierwinkelmessvorrichtung 1 vorhanden ist, wobei der dargestellte Teilschnitt zu der in der Figur 1 gezeigten Ausführungsform passen könnte. In der in der Figur 2 dargestellten Ausführungsform ist der erste Kupplungspartner 12 wiederum als Königszapfen ausgebildet, welcher über Kraftübertragungsflächen 18 verfügt. Die Gierwinkelmessvorrichtung 1 ist dabei zum Teil durch eine Messanordnung 30 im zweiten Kupplungspartner 14 gebildet, welcher einen Deformationsbestandteil 32 und eine Detektionsanordnung 34 aufweist. Der Deformationsbestandteil 32 umschließt dabei die Detektionsanordnungen 34, sodass der erste Kupplungspartner 12 lediglich mit dem Deformationsbestandteil 32 kontaktiert.

In der Figur 3 ist eine perspektivische Ansicht eines zweiten Kupplungspartners 14 in Form einer Sattelkupplung dargestellt. In der dargestellten Ausführungsform des zweiten Kupplungspartners 14 ist am äußeren Ende in Einfahrrichtung E der Einfahröffnung die Messanordnung 30 zu erkennen. Der zweite Kupplungspartner 14 verfügt dabei über ein Kupplungsschloss 40, welches dazu dient, den ersten Kupplungspartner (12) (nicht dargestellt) formschlüssig halten zu können und so die Kupplung zu verriegeln. Prinzipiell würde die in der Figur 3 dargestellte Ausführungsform der Messanordnung 30 dabei zu den Schnitten aus der Figur 1 und der Figur 2 passen.

### Bezugszeichenliste:

- 1: - Gierwinkelmessvorrichtung
- 10: - Kupplungsanordnung
- 12: - ersten Kupplungspartner
- 13: Verschleißring
- 14: - zweiter Kupplungspartner
- 18: - Kraftübertragungsflächen des ersten Kupplungspartners (12)
- 19: - Kraftübertragungsflächen des zweiten Kupplungspartners (14)
- 20: - Geberelement
- 22: - Vorsprung
- 24: - Außenfläche
- 30: - Messanordnung
- 32: - Deformationsbestandteil
- 34: - Detektionsanordnung
- 40: - Kupplungsschloss
- A: - Ausfahrrichtung
- E: - Einfahrrichtung
- Q: - Querrichtung
- R: - Rotationsachse
- α: - Gierwinkel

## Patentansprüche

1. Gierwinkelmessvorrichtung (1) für eine trennbare Kupplungsanordnung (10), insbesondere für Sattelkupplungen, umfassend ein Geberelement (20) und eine Messanordnung (30),
wobei das Geberelement (20) an einem ersten Kupplungspartner (12) und die Messanordnung (30) an einem zweiten Kupplungspartner (14) angeordnet oder anordenbar sind,
wobei der erste Kupplungspartner (12) dazu ausgelegt ist, durch die Kupplungsanordnung (10) um eine Rotationsachse (R) relativ zum zweiten Kupplungspartner (14) drehbar gelagert zu werden,
wobei das Geberelement (20) ein Messsignal in der Messanordnung (30) erzeugt, welches dazu dient, den Gierwinkel (a) um die Rotationsachse (R) zu bestimmen,
wobei das Geberelement (20) unmittelbar mit der Messanordnung (30) in Kontakt steht, und
**dadurch gekennzeichnet, dass**
dieser unmittelbare Kontakt das Messsignal in der Messanordnung (30) erzeugt.

2. Gierwinkelmessvorrichtung (1) gemäß Anspruch 1,
wobei der erste Kupplungspartner (12) und der zweite Kupplungspartner (14) Kraftübertragungsflächen (18, 19) aufweisen,
wobei die Kraftübertragungsflächen (18, 19) dazu ausgelegt sind, Kräfte in eine Ausfahrrichtung (A) und/oder in eine Querrichtung (Q) vom ersten Kupplungspartner (12) auf den zweiten Kupplungspartner (14) zu übertragen, und wobei das Geberelement (20) und die Messanordnung (30) außerhalb, insbesondere oberhalb und/oder unterhalb, der Kraftübertragungsflächen (18, 19) angeordnet sind.

3. Gierwinkelmessvorrichtung (1) gemäß einem der vorhergehenden Ansprüche,
wobei sich die Messanordnung (30) in einem Bereich von mindestens +/-89°, bevorzugt von +/- 45° und besonders bevorzugt in einem Bereich von +/- 15° um die die Rotationsachse (R) erstreckt.

4. Gierwinkelmessvorrichtung (1) gemäß einem der vorhergehenden Ansprüche,
wobei das Geberelement (20) rotationsstarr mit dem ersten Kupplungspartner (12) verbunden ist oder verbindbar ist.

5. Gierwinkelmessvorrichtung (1) gemäß einem der vorhergehenden Ansprüche,
wobei die Messanordnung (30) rotationsstarr mit dem zweiten Kupplungspartner (14) verbunden oder verbindbar ist.

6. Gierwinkelmessvorrichtung (1) gemäß einem der vorhergehenden Ansprüche,
wobei das Geberelement (20) einen Vorsprung (22) aufweist, welcher in eine Richtung senkrecht zu der Rotationsachse (R) und in Richtung des zweiten Kupplungspartners (14) hervorspringt.

7. Gierwinkelmessvorrichtung (1) gemäß einem der vorhergehenden Ansprüche, wobei sich der Vorsprung (22) von einer Außenfläche (24) erstreckt, welche zumindest bereichsweise rotationssymmetrisch bezüglich der Rotationsachse (R) ist.

8. Gierwinkelmessvorrichtung (1) gemäß einem der vorhergehenden Ansprüche, wobei der erste Kupplungspartner (12) ein Königszapfen ist, wobei das Geberelement (20) ein Teil des Königszapfens ist, oder durch eine Hülse gebildet ist, welche den Königszapfen zumindest bereichsweise, bevorzugt vollständig, umgibt.

9. Gierwinkelmessvorrichtung (1) gemäß einem der vorhergehenden Ansprüche,
wobei die Messanordnung (30) über einen Deformationsbestandteil (32) und eine Detektionsanordnung (34) verfügt,
wobei der Deformationsbestandteil (32) dazu ausgelegt ist, mit einem Teil des Geberelements (20), insbesondere dem Vorsprung (22), unmittelbar in Kontakt zu treten, und
wobei die Detektionsanordnung (34) dazu dient, die Lokation des Kontaktes zu bestimmen.

10. Gierwinkelmessvorrichtung (1) gemäß Anspruch 9,
wobei die Detektionsanordnung (34) durch Piezoelemente gebildet ist.

11. Gierwinkelmessvorrichtung (1) gemäß einem der vorhergehenden Ansprüche,
wobei die Messanordnung (22) eine Vielzahl von, insbesondere parallel zu der Rotationsachse (R) verlaufenden, elektrischen Kontakte aufweist, wobei das Geberelement (20) derart mit den elektrischen Kontakten in Eingriff bringbar ist, dass das Geberelement (20) unmittelbar oder mittelbar zwei dieser elektrischen Kontakte leitend verbindet.

12. Nutzfahrzeug umfassend eine Gierwinkelmessvorrichtung (1) gemäß einem der vorhergehenden Ansprüche.

## Claims

1. A yaw angle measuring device (1) for a separable coupling (10), in particular for fifth wheel couplings, comprising a sensor element (20) and a measuring arrangement (30),
wherein the sensor element (20) is arranged or can be arranged on a first coupling partner (12) and the measuring arrangement (30) is arranged or can be arranged on a second coupling partner (14),
wherein the first coupling partner (12) is designed to be mounted by means of the coupling arrangement (10) such that it is rotatable about an axis of rotation (R) relative to the second coupling partner (14),
wherein the sensor element (20) generates a measuring signal in the measuring arrangement (30), which serves to determine the yaw angle (α) about the axis of rotation (R),
wherein the sensor element (20) is in direct contact with the measuring arrangement (30), and
**characterized in that** this direct contact generates the measuring signal in the measuring arrangement (30).

2. The yaw angle measuring device (1) as claimed in claim 1,
wherein the first coupling partner (12) and the second coupling partner (14) have force-transmitting surfaces (18, 19),
wherein the force-transmitting surfaces (18, 19) are designed to transmit forces from the first coupling partner (12) to the second coupling partner (14) in an exit direction (A) and/or in a transverse direction (Q), and wherein the sensor element (20) and the measuring arrangement (30) are arranged outside, in particular above and/or below, the force-transmitting surfaces (18, 19).

3. The yaw angle measuring device (1) as claimed in one of the preceding claims,
wherein the measuring arrangement (30) extends in a range of at least +/-89°, preferably of +/- 45° and particularly preferably in a range of +/- 15° about the axis of rotation (R).

4. The yaw angle measuring device (1) as claimed in one of the preceding claims,
wherein the sensor element (20) is connected or can be connected to the first coupling partner (12) in a rotationally fixed manner.

5. The yaw angle measuring device (1) as claimed in one of the preceding claims,
wherein the measuring arrangement (30) is connected or can be connected to the second coupling partner (14) in a rotationally fixed manner.

6. The yaw angle measuring device (1) as claimed in one of the preceding claims,
wherein the sensor element (20) has a projection (22), which projects in a direction perpendicular to the axis of rotation (R) and in a direction of the second coupling partner (14).

7. The yaw angle measuring device (1) as claimed in one of the preceding claims, wherein the projection (22) extends from an outer surface (24) which is rotationally symmetrical with respect to the axis of rotation (R), at least in some regions.

8. The yaw angle measuring device (1) as claimed in one of the preceding claims, wherein the first coupling partner (12) is a kingpin, wherein the sensor element (20) is part of the kingpin or is formed by a sleeve which encompasses the kingpin at least in some regions, preferably completely.

9. The yaw angle measuring device (1) as claimed in one of the preceding claims,
wherein the measuring arrangement (30) possesses a deformation component (32) and a detection arrangement (34),
wherein the deformation component (32) is designed to come into direct contact with part of the sensor element (20), in particular the projection (22), and wherein the detection arrangement (34) serves to determine the location of the contact.

10. The yaw angle measuring device (1) as claimed in claim 9,
wherein the detection arrangement (34) is formed by piezo elements.

11. The yaw angle measuring device (1) as claimed in one of the preceding claims,
wherein the measuring arrangement (22) has a plurality of electrical contacts, in particular extending parallel to the axis of rotation (R),
wherein the sensor element (20) can be brought into engagement with the electrical contacts such that the sensor element (20) connects two of these electrical contacts directly or indirectly in a conductive manner.

12. A utility vehicle comprising a yaw angle measuring device (1) as claimed in one of the preceding claims.

## Revendications

1. Dispositif de mesure de l'angle de lacet (1) pour un dispositif d'attelage séparable (10), en particulier pour des sellettes d'attelage, comprenant un élément émetteur (20) et un ensemble de mesure (30),
l'élément émetteur (20) étant ou pouvant être disposé sur un premier partenaire d'attelage (12) et l'ensemble de mesure (30) étant ou pouvant être disposé sur un deuxième partenaire d'attelage (14),
dans lequel
le premier partenaire d'attelage (12) est conçu pour être monté de manière à pouvoir tourner autour d'un axe de rotation (R) par rapport au deuxième partenaire d'attelage (14), par l'intermédiaire du dispositif d'attelage (10),
l'élément émetteur (20) génère un signal de mesure dans l'ensemble de mesure (30), qui sert à déterminer l'angle de lacet (a) autour de l'axe de rotation (R),
l'élément émetteur (20) est en contact direct avec l'ensemble de mesure (30),
**caractérisé en ce que**
ledit contact direct génère le signal de mesure dans l'ensemble de mesure (30).

2. Dispositif de mesure de l'angle de lacet (1) selon la revendication 1, dans lequel
le premier partenaire d'attelage (12) et le deuxième partenaire d'attelage (14) présentent des surfaces de transmission de force (18, 19),
les surfaces de transmission de force (18, 19) sont conçues pour transmettre des forces dans une direction de déploiement (A) et/ou dans une direction transversale (Q) depuis le premier partenaire d'attelage (12) jusqu'au deuxième partenaire d'attelage (14), et
l'élément émetteur (20) et l'ensemble de mesure (30) sont disposés à l'extérieur, en particulier au-dessus et/ou au-dessous, des surfaces de transmission de force (18, 19).

3. Dispositif de mesure de l'angle de lacet (1) selon l'une des revendications précédentes,
dans lequel l'ensemble de mesure (30) s'étend dans une plage d'au moins +/- 89°, de préférence +/- 45° et de manière particulièrement préférée dans une plage de +/- 15° autour de l'axe de rotation (R).

4. Dispositif de mesure de l'angle de lacet (1) selon l'une des revendications précédentes,
dans lequel l'élément émetteur (20) est ou peut être relié de manière rigide en rotation au premier partenaire d'attelage (12).

5. Dispositif de mesure de l'angle de lacet (1) selon l'une des revendications précédentes,
dans lequel l'ensemble de mesure (30) est relié ou peut être relié de manière rigide en rotation au deuxième partenaire d'attelage (14).

6. Dispositif de mesure de l'angle de lacet (1) selon l'une des revendications précédentes,
dans lequel l'élément émetteur (20) présente une protubérance (22) qui fait saillie dans une direction perpendiculaire à l'axe de rotation (R) et en direction du deuxième partenaire d'attelage (14).

7. Dispositif de mesure de l'angle de lacet (1) selon l'une des revendications précédentes,
dans lequel la protubérance (32) s'étend à partir d'une surface extérieure (24) qui est au moins localement à symétrie de révolution par rapport à l'axe de rotation (R).

8. Dispositif de mesure de l'angle de lacet (1) selon l'une des revendications précédentes,
dans lequel le premier partenaire d'attelage (12) est un pivot central, et l'élément émetteur (20) fait partie du pivot central ou est formé par un manchon qui entoure le pivot central au moins localement, de préférence complètement.

9. Dispositif de mesure de l'angle de lacet (1) selon l'une des revendications précédentes,
dans lequel l'ensemble de mesure (30) comprend un composant de déformation (32) et un ensemble de détection (34),
le composant de déformation (32) est conçu pour entrer en contact direct avec une partie de l'élément émetteur (20), en particulier avec la protubérance (22), et
l'ensemble de détection (34) sert à déterminer l'emplacement du contact.

10. Dispositif de mesure de l'angle de lacet (1) selon la revendication 9, dans lequel l'ensemble de détection (34) est formé par des éléments piézoélectriques.

11. Dispositif de mesure de l'angle de lacet (1) selon l'une des revendications précédentes,
dans lequel l'ensemble de mesure (22) présente une multitude de contacts électriques, s'étendant en particulier parallèlement à l'axe de rotation (R),
l'élément émetteur (20) peut être amené en engagement avec les contacts électriques de telle sorte que l'élément émetteur (20) relie de manière conductrice directement ou indirectement deux de ces contacts électriques.

12. Véhicule utilitaire comprenant un dispositif de mesure de l'angle de lacet (1) selon l'une des revendications précédentes.
